(19) **Europäisches Patentamt / European Patent Office / Office européen des brevets**

(11) **EP 3 116 677 B1**

(12) **FASCICULE DE BREVET EUROPEEN**

(45) Date de publication et mention de la délivrance du brevet:
**11.09.2019 Bulletin 2019/37**

(21) Numéro de dépôt: **14715431.4**

(22) Date de dépôt: **14.03.2014**

(51) Int Cl.:
**B21B 1/22** *(2006.01)*  **B21B 3/00** *(2006.01)*
**B23K 35/02** *(2006.01)*  **C22C 38/02** *(2006.01)*
**C22C 38/06** *(2006.01)*  **C22C 38/00** *(2006.01)*
**B23K 35/30** *(2006.01)*  **C22C 38/08** *(2006.01)*
**C22C 38/04** *(2006.01)*

(86) Numéro de dépôt international:
**PCT/IB2014/059819**

(87) Numéro de publication internationale:
**WO 2015/136333 (17.09.2015 Gazette 2015/37)**

(54) **ALLIAGE FER-NICKEL PRÉSENTANT UNE SOUDABILITÉ AMÉLIORÉE**

EISEN-NICKEL-LEGIERUNG MIT VERBESSERTER SCHWEISSBARKEIT

IRON-NICKEL ALLOY HAVING IMPROVED WELDABILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**18.01.2017 Bulletin 2017/03**

(73) Titulaire: **Aperam**
**1882 Luxembourg (LU)**

(72) Inventeurs:
• **REYDET, Pierre-Louis**
**58130 Urzy (FR)**
• **JOUVENCEAU, Fanny**
**58490 Saint Parize Le Chatel (FR)**
• **PANIER, Roland**
**58000 Nevers (FR)**

(74) Mandataire: **Lavoix**
**2, place d'Estienne d'Orves**
**75441 Paris Cedex 09 (FR)**

(56) Documents cités:
| | |
|---|---|
| EP-A1- 0 713 923 | EP-A1- 0 792 943 |
| WO-A1-2004/063411 | CN-A- 101 100 021 |
| CN-A- 102 218 448 | JP-A- H1 161 341 |
| JP-A- H1 192 873 | JP-A- 2001 131 706 |
| JP-A- 2007 331 022 | |

**Description**

La présente invention concerne un alliage Fe-Ni à faible coefficient de dilatation thermique destiné à être utilisé pour fabriquer des assemblages soudés pour des applications dans lesquelles une stabilité dimensionnelle élevée sous l'effet des variations de température est requise.

L'alliage selon l'invention est plus particulièrement destiné à être utilisé dans des applications cryogéniques, et notamment pour fabriquer des assemblages destinés à contenir des gaz liquéfiés, et notamment des tubes de transport ou des cuves de transport ou de stockage de gaz liquéfiés.

Actuellement, on réalise de tels assemblages soudés en utilisant un alliage fer-nickel de type Invar® comme métal de base. En effet, les Invar® sont connus pour leur faible coefficient de dilatation thermique, et sont donc particulièrement adaptés pour les applications mentionnées ci-dessus.

Les alliages Fe-Ni utilisés actuellement ne donnent cependant pas entière satisfaction. En effet, les inventeurs ont constaté que les assemblages soudés réalisés à partir de ces alliages présentaient des défauts de soudure. En particulier, ils ont observé que l'utilisation de ces alliages conduisait à des cordons de soudure irréguliers et présentant en surface des ilots d'oxydes.

JP 11-61341, JPH1192873 et JP 2001-131706 décrivent des alliages Fe-Ni de type Invar.

Un but de la présente invention est de remédier à ces inconvénients et de proposer un alliage Fe-Ni permettant de réaliser des assemblages soudés à stabilité dimensionnelle importante et présentant une soudabilité améliorée.

A cet effet, l'invention concerne un alliage à base de fer selon la revendication 1.

Selon des modes de réalisation particuliers, l'alliage selon l'invention comprend une ou plusieurs des caractéristiques des revendications 2 à 5, prise(s) isolément ou suivant toute(s) combinaison(s) techniquement possible(s).

L'invention concerne également un procédé de fabrication d'une bande selon la revendication 6.

L'invention concerne également une bande selon la revendication 7.

L'invention concerne également un procédé de fabrication d'un fil de soudure selon la revendication 8.

L'invention concerne également un fil de soudure selon la revendication 9.

L'invention concerne également l'utilisation selon la revendication 10.

L'invention sera mieux comprise à la lecture de la description qui va suivre, donnée uniquement à titre d'exemple, et faite en référence aux dessins annexés, sur lesquels :

- la figure 1 est une vue au microscope optique d'une pièce présentant de la corrosion filamentaire ; et
- la figure 2 est un graphe présentant les résultats d'expériences réalisées par les inventeurs.

Dans toute la description, les teneurs sont données en pourcentage en poids. Par ailleurs, les teneurs en Al, Mg, Ca, S et O correspondent aux teneurs totales de ces éléments dans l'alliage.

L'alliage selon l'invention est un alliage à base de fer comprenant, en poids :

$$35\% \leq Ni \leq 37\%$$

$$traces \leq Mn \leq 0{,}6\%$$

$$traces \leq C \leq 0{,}07\%$$

$$traces \leq Si \leq 0{,}35\%$$

$$traces \leq Mo < 0{,}5\%$$

$$traces \leq Co \leq 0{,}5\%$$

$$traces \leq Cr \leq 0{,}5\%$$

$$\text{traces} \leq P \leq 0,01\%$$

$$\text{traces} \leq S \leq 0,0035\%$$

$$\text{traces} \leq O \leq 0,0025\%$$

$$0,011\% \leq [(3,138 \times Al + 6 \times Mg + 13,418 \times Ca) - (3,509 \times O + 1,770 \times S)] \leq 0,038\%$$

$$0,0003\% < Ca \leq 0,0015\%$$

$$0,0005\% < Mg \leq 0,0035\%$$

$$0,0020\% < Al \leq 0,0085\%$$

le reste étant du fer et des éléments résiduels résultant de l'élaboration.

L'alliage selon l'invention est un alliage de type Invar®.

Par éléments résiduels résultant de l'élaboration, on entend des éléments qui sont présents dans les matières premières utilisées pour élaborer l'alliage ou qui proviennent des appareils utilisés pour son élaboration, et par exemple des réfractaires des fours. Ces éléments résiduels n'ont pas d'effet métallurgique sur l'alliage.

Les éléments résiduels comprennent notamment des éléments de la famille du plomb (Pb), qui sont réduits au minimum afin de limiter la sensibilité de l'alliage aux criques de solidification et éviter de dégrader la soudabilité.

Le phosphore (P), le molybdène (Mo), le soufre (S) et l'oxygène (O) sont des impuretés résultant de l'élaboration dont il convient de limiter les quantités totales présentes dans l'alliage à des teneurs inférieures aux teneurs précisées.

Dans l'alliage selon l'invention, la teneur en carbone est limitée afin d'éviter la précipitation de carbures de type MC où M est un élément résiduel susceptible de s'associer avec le carbone pour former des carbures, tel que le titane (Ti), le niobium (Nb), le vanadium (V), le zirconium (Zr). En effet, certains carbures dégradent la résistance de l'alliage à la fissuration à chaud. La teneur en carbone est également limitée afin de limiter la formation de porosités pendant le soudage par effervescence.

L'alliage selon l'invention présente en outre un coefficient moyen de dilatation thermique faible, en particulier inférieur ou égal à $2.10^{-6}$ $K^{-1}$ entre -180°C et 0°C, et avantageusement inférieur ou égal à $1,5.10^{-6}$ $K^{-1}$ entre -180°C et 0°C, et inférieur ou égal à $2,5.10^{-6}$ $K^{-1}$ entre 20°C et 100°C.

En outre, il est stable vis-à-vis de la transformation martensitique jusqu'au-dessous de la température de liquéfaction de l'azote (-196°C). En particulier, ses teneurs en éléments gammagènes, à savoir en nickel (Ni), manganèse (Mn) et carbone (C), sont ajustées de façon à ce que sa structure métallurgique soit stable à 4,2 Kelvin (température de liquéfaction de l'hélium) en l'absence de déformation plastique ou que sa fraction volumique de martensite reste inférieure ou égale à 5% lorsqu'il est soumis à une déformation de 25% par traction plane interrompue à -196°C.

Les teneurs en cobalt (Co), manganèse (Mn) et silicium (Si) dans l'alliage sont limitées afin d'éviter de dégrader la stabilité de l'alliage à la transformation martensitique, ainsi que le coefficient moyen de dilatation entre -180°C et 0°C.

L'alliage selon l'invention présente un module d'élasticité faible, en particulier inférieur à 150 000 MPa.

Il ne présente pas de transition de résilience « ductile-fragile ». Plus particulièrement, il présente une résilience à -196°C supérieure à 150 joule/$cm^2$, et en particulier supérieure 200 joule/$cm^2$.

Ces propriétés le rendent particulièrement adapté pour des applications dans lesquelles la stabilité dimensionnelle sous l'effet des variations de température est requise.

Dans l'alliage selon l'invention, les teneurs en soufre (S) et en oxygène (O) sont réduites autant que possible pour améliorer l'aptitude à la transformation à chaud de l'alliage. En particulier, on cherche à réduire autant que possible les teneurs en soufre (S) et en oxygène (O) en solution solide dans l'alliage.

Cette limitation de la teneur en oxygène et en soufre en solution solide est notamment obtenue par l'ajout de silicium, lequel agit comme désoxydant et indirectement comme désulfurant par l'intermédiaire de réactions chimiques entre le métal liquide et le laitier lors de l'élaboration de l'alliage. Il est en effet connu que la teneur en soufre % *S* du métal liquide d'un acier allié obéit, pendant l'opération d'affinage en phase liquide, à la relation suivante :

$$\% \underline{S} = (\%S).\frac{a_0}{C'_S}$$

où

$(\%S)$ est la teneur en soufre du laitier
$C'_S$ est la capacité en soufre du laitier
$a_0$ est l'activité de l'oxygène du métal liquide

Le manganèse participe à la désulfuration en phase solide.

Par ailleurs, les inventeurs ont constaté que des teneurs en calcium, aluminium et magnésium trop élevées nuisaient à la soudabilité de l'alliage. Par conséquent, les teneurs en ces éléments devaient être limitées. Plus particulièrement, les inventeurs de la présente invention ont découvert que lorsque :

(a1) la teneur en calcium est inférieure ou égale à 0,0015%,
(b1) la teneur en magnésium est inférieure ou égale à 0,0035%
(c1) la teneur en aluminium est inférieure ou égale à 0,0085%,

et que, par ailleurs, les teneurs en aluminium, magnésium, calcium, oxygène et soufre dans l'alliage respectent la relation suivante :

$$[(3{,}138 \times Al + 6 \times Mg + 13{,}418 \times Ca) - (3{,}509 \times O + 1{,}770 \times S)] \le 0{,}038\% \ (d1),$$

les cordons de soudure réalisés sur des pièces réalisées dans l'alliage selon l'invention sont réguliers.

Au contraire, lorsque les relations (a1), (b1), (c1) et (d1) ci-dessus ne sont pas respectées, les cordons de soudure sont irréguliers.

Les inventeurs pensent que la régularité des cordons dans l'alliage selon l'invention résulte du fait que, pour les teneurs précisées, d'une part, l'arc électrique de l'outil de soudage est stable, et d'autre part, la surface des cordons est dénuée d'agrégats d'oxydes. Au contraire, lorsque l'alliage contient des teneurs en ces éléments au-dessus des limites précisées, l'arc électrique de l'outil de soudage est instable, mais aussi, des îlots d'oxydes épinglent la base des cordons, ce qui résulte en des largeurs de cordon variables, et donc en des cordons irréguliers. Les inventeurs pensent que cet épinglage provient notamment de variations d'énergie de surface de la zone fondue lorsque le calcium, l'aluminium et le magnésium ne respectent pas les relations ci-dessus. Par épinglage de la base des cordons, on entend que la base des cordons ne peut pas migrer, elle reste immobile, bloquée hors état d'équilibre. Si la force d'épinglage disparaît la base des cordons retrouve son mouvement pour converger vers son état d'équilibre.

De préférence,

- la teneur en calcium est inférieure ou égale à 0,0010% en poids ; et/ou
- la teneur en magnésium est inférieure ou égale à 0,0020% en poids ; et/ou
- la teneur en aluminium est inférieure ou égale à 0,0070% en poids.

Cependant, les inventeurs de la présente invention ont constaté que lorsque, conformément à l'invention :

(a2) la teneur en calcium (Ca) est strictement supérieure à 0,0003% en poids,
(b2) la teneur en magnésium (Mg) est strictement supérieure à 0,0005% en poids,
(c2) la teneur en aluminium (Al) est strictement supérieure à 0,0020% en poids, et et que, par ailleurs, les teneurs totales en aluminium, magnésium, calcium, soufre et oxygène dans l'alliage respectent la relation suivante :

$$[(3{,}138 \times Al + 6 \times Mg + 13{,}418 \times Ca) - (3{,}509 \times O + 1{,}770 \times S)] \ge 0{,}011\% \ (d2),$$

l'alliage obtenu présente une bonne résistance à la fissuration à chaud.

En particulier, l'alliage selon l'invention développe une longueur totale de fissures inférieure ou égale à 10 mm (+/- 0,5mm) lors d'un essai Varestreint réalisé suivant la norme européenne FD CEN ISO/TR 17641-3 sous 3,2% de déformation plastique.

Au contraire, les inventeurs ont observé que lorsque les relations (a2), (b2), (c2) et (d2) ci-dessus ne sont pas respectées, l'alliage présente une résistance à la fissuration à chaud qui n'est pas satisfaisante. En particulier, l'alliage développe alors une longueur totale de fissures supérieure à 10 mm (+/- 0,5mm) lors d'un essai Varestreint tel que mentionné ci-dessus.

De préférence, la teneur en aluminium est supérieure ou égale à 0,0030%.

Les inventeurs pensent que, dans l'alliage selon l'invention, cette amélioration de la résistance à la fissuration à chaud provient de la présence, limitée, de calcium, de magnésium et d'aluminium dans l'alliage à des teneurs permettant à ces éléments de piéger le soufre et l'oxygène résiduels sous forme de sulfures et/ou d'oxydes en phase liquide.

On notera que l'expression : [(3,138 Al + 6 Mg + 13,418 Ca) - (3,509 O + 1,770 S)], développée par les inventeurs de la présente invention, compare les teneurs en calcium, magnésium et aluminium à celles en oxygène et en soufre. Elle exprime l'idée selon laquelle la quantité de calcium, de magnésium et d'aluminium qui dégrade la soudabilité correspond à la fraction des teneurs totales en Ca, Mg et Al qui correspond à la quantité de ces éléments présents en solution solide dans l'alliage, c'est-à-dire, non précipitée sous forme d'oxydes ou de sulfures.

Les poids pondéraux du calcium, du magnésium et de l'aluminium dans cette relation traduisent l'affinité relative de chacun de ces éléments avec le soufre et l'oxygène constatée par les inventeurs, c'est-à-dire la capacité de chacun de ces éléments à piéger le soufre et l'oxygène pour former des sulfures ou des oxydes.

Dans cette expression, Al, Mg, Ca, O et S correspondent aux teneurs totales de ces éléments dans l'alliage, exprimées en pourcentages en poids.

On notera que le calcium, le magnésium et l'aluminium sont habituellement considérés comme de simples impuretés dans les alliages relevant du domaine de l'invention. Cependant, comme expliqué ci-dessus, les inventeurs de la présente invention se sont aperçus que ces éléments pouvaient avoir les effets bénéfiques indiqués ci-dessus lorsqu'ils étaient présents en faibles quantités dans l'alliage, à savoir dans les plages précisées.

Compte tenu de ce qui précède, l'alliage selon l'invention permet de réaliser des assemblages soudés en Invar® ne présentant pas les défauts de soudure observés dans le cas des alliages utilisés habituellement.

De préférence, l'alliage selon l'invention comprend :

$$0,15\% \leq Mn \leq 0,6\%$$

$$0,02\% \leq C \leq 0,07\%$$

$$0,1\% \leq Si \leq 0,35\%.$$

Cet alliage est particulièrement adapté pour les applications cryogéniques, à savoir notamment le transport et le stockage de gaz liquéfiés, tels que l'hydrogène liquide, l'azote liquide, le méthane liquide ou le propane liquide.

En particulier, les teneurs en manganèse (Mn) et en carbone (C) respectivement supérieures ou égales à 0,15% et à 0,02% améliorent la stabilité de l'alliage à la transformation martensitique à -196°C.

Par ailleurs, les inventeurs ont découvert que le silicium présent dans l'alliage à des teneurs supérieures à 0,10% améliore la tenue de l'alliage à la corrosion filamentaire par formation d'une couche corticale d'oxyde de silicium développée au moyen d'un traitement thermique final approprié.

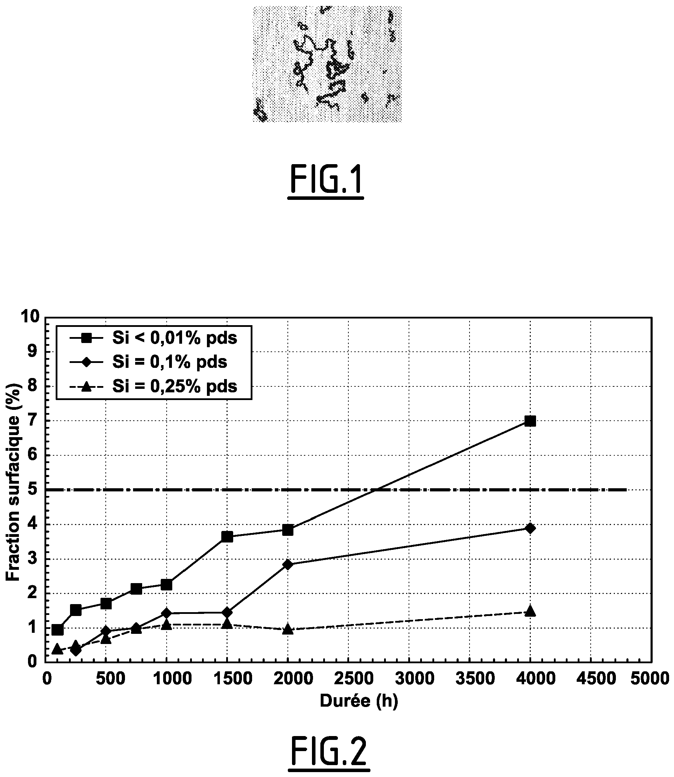

La corrosion filamentaire résulte du contact prolongé de l'alliage avec l'atmosphère. Elle se produit en particulier sous l'effet de l'oxygène et des polluants de l'air, ainsi que de la vapeur d'eau. En anglais, la corrosion filamentaire est désignée par le terme « filiform corrosion ». La figure 1 illustre un exemple de corrosion filamentaire.

L'alliage selon l'invention peut être élaboré par toute méthode adaptée connue de l'homme du métier. A titre d'exemple, il est élaboré dans un four électrique à arc, puis est affiné en poche par des méthodes habituelles, qui peuvent notamment comprendre une étape de mise sous pression réduite. En variante, l'alliage suivant l'invention est élaboré en four sous vide à partir de matières premières à bas résiduels.

On fabrique ensuite, par exemple, des bandes à froid à partir de l'alliage ainsi élaboré. A titre d'exemple, on utilise le procédé suivant pour fabriquer de telles bandes à froid.

On coule l'alliage sous forme de demi-produits tels que des lingots, des électrodes de refusion, des brames, notamment des brames minces d'épaisseur inférieure à 180 mm, ou des billettes.

Lorsque l'alliage est coulé sous forme d'électrode de refusion, celle-ci est avantageusement refondue sous vide ou sous laitier électro-conducteur afin d'obtenir une meilleure pureté et des demi-produits plus homogènes.

Le demi-produit ainsi obtenu est ensuite laminé à chaud à une température comprise entre 950°C et 1300°C pour obtenir une bande à chaud. L'épaisseur de la bande à chaud est notamment comprise entre 2 mm et 6 mm.

Selon un mode de réalisation, le laminage à chaud est précédé d'un traitement thermique d'homogénéisation chimique à une température comprise entre 950°C et 1300°C pendant une durée comprise entre 30 minutes à 24 heures.

La bande à chaud est refroidie à température ambiante pour former une bande refroidie, puis enroulée en bobines.

La bande refroidie est ensuite laminée à froid pour obtenir une bande à froid présentant une épaisseur finale avantageusement comprise entre 0,5 mm et 2 mm. Le laminage à froid est effectué en une passe ou en plusieurs passes successives.

A l'épaisseur finale, la bande à froid est soumise à un traitement thermique de recristallisation dans un four statique pendant une durée allant de 10 minutes à plusieurs heures et à une température supérieure à 700°C. En variante, elle est soumise à un traitement thermique de recristallisation dans un four de recuit continu pendant une durée allant de quelques secondes à 1 minute environ, à une température supérieure à 800°C dans la zone de maintien du four, et sous atmosphère protégée de type N2/H2 (30%/70%) avec une température de givre comprise entre -50°C et -15°C.

Un traitement thermique de recristallisation peut être réalisé, dans les mêmes conditions, en cours de laminage à froid, à une épaisseur intermédiaire entre l'épaisseur initiale (correspondant à l'épaisseur de la bande à chaud) et l'épaisseur finale. L'épaisseur intermédiaire est par exemple choisie égale à 1,5 mm lorsque l'épaisseur finale de la bande à froid est de 0,7 mm.

La méthode d'élaboration de l'alliage et de fabrication de bandes à froid en cet alliage sont données uniquement à titre d'exemple.

Toutes autres méthodes d'élaboration de l'alliage selon l'invention et de fabrication de produits finis réalisés en cet alliage connues de l'homme du métier peuvent être utilisées à cet effet.

Essais

Les inventeurs ont réalisé des coulées de laboratoire d'alliages présentant des teneurs en Ni, Mn, C, Si, Co, Cr, Mo, S, O et P dans les plages précisées, et des teneurs en Ca, Mg et Al variant entre quelques ppm et approximativement 0,001%. Les lingots ainsi obtenus ont été transformés à chaud par laminage pour produire des plaques de quelques millimètres d'épaisseur. Ces plaques ont ensuite été usinées pour obtenir une surface dénuée d'oxydation à chaud.

Les compositions d'alliage de chacune des plaques testées sont exposées dans le tableau ci-après.

Les inventeurs ont réalisé sur les plaques ainsi obtenues des lignes de fusion avec le procédé TIG (Tungsten Inert Gas) pour mettre en évidence l'incidence du calcium, du magnésium et de l'aluminium sur la régularité des cordons de soudure. Les résultats de ces tests sont exposés dans la colonne intitulée « Ligne de fusion TIG » dans le tableau ci-après.

La largeur des cordons de soudure a été mesurée par microscopie optique et la régularité des cordons a été définie comme suit :

$$\text{Régularité} = 100 \times (L_{max} - L_{min})/L_{max} \ (1),$$

où $L_{min}$ correspond à la largeur minimale mesurée du cordon de soudure et $L_{max}$ correspond à la largeur maximale mesurée du cordon de soudure.

On a considéré que la régularité du cordon de soudure était bonne (Indice 1 dans le tableau ci-après) lorsque la régularité calculée par application de la formule (1) est inférieure ou égale à 2,5%.

On a considéré que la régularité du cordon de soudure était acceptable (Indice 2 dans le tableau ci-après) lorsque la régularité calculée par application de la formule (1) est comprise entre 2,5% et 5%.

On a considéré que la régularité du cordon de soudure était mauvaise (Indice 3 dans le tableau ci-après) lorsque la régularité calculée par application de la formule (1) est strictement supérieure à 5%.

Par ailleurs, les inventeurs ont réalisé sur les plaques obtenues des essais Varestraint suivant la norme européenne FD CEN ISO/TR 17641-3 sous 3,2% de déformation plastique afin d'évaluer leur tenue à la fissuration à chaud. Ils ont mesuré la longueur totale de fissures développées durant l'essai, et ont classé les plaques en deux catégories :

- les plaques présentant, à l'issue de l'essai, une longueur totale de fissures inférieure ou égale à 10 mm +/- 0,5 mm ont été considérées comme présentant une bonne résistance à la fissuration à chaud, tandis que
- les plaques présentant une longueur totale de fissures strictement supérieure à 10 mm +/- 0,5 mm ont été considérées comme présentant une résistance à la fissuration à chaud insuffisante.

Les résultats de ces tests sont exposés dans la colonne intitulée « Essais Varestraint 3,2% de déformation » du tableau ci-après. Dans cette colonne, les plaques présentant une bonne tenue à la fissuration à chaud sont celles qui présentent une longueur totale de fissures notée « 1 à 10 », tandis que les plaques présentant une tenue à la fissuration à chaud insuffisante sont celles qui présentent une longueur totale de fissures notée « 10 à 15 ».

Dans le tableau ci-après, on a porté dans la colonne « Loi de comportement », la valeur prise par l'expression : $[(3{,}138 \times Al + 6 \times Mg + 13{,}418 \times Ca) - (3{,}509 \times O + 1{,}770 \times S)]$ pour l'alliage considéré, où Al, Mg, Ca, O et S désignent respectivement les teneurs totales en Al, Mg, Ca, O et S en pourcentage en poids dans l'alliage.

| Alliage | Fe | Ni | Mn | C | Si | Ca | Mg | Al | S | O | Ligne de fusion TIG — Régularité du cordon (1 = Bon, 2 = Acceptable, 3 = Mauvais) | Essais Varestraint 3,2% de déformation — Longueur totale de fissures (mm) | Loi de comportement |
|---|---|---|---|---|---|---|---|---|---|---|---|---|---|
| A | reste (Bas Soufre) | 36 | 0,35 | 0,03 | 0,15 | 0,0005 | 0,0015 | 0,0075 | 0,0003 | 0,0010 | 1 | 1 à 10 | 0,035 |
| B | | 36 | 0,35 | 0,03 | 0,15 | 0,0008 | 0,0010 | 0,0045 | 0,0005 | 0,0011 | 1 | 1 à 10 | 0,026 |
| C | | 36 | 0,35 | 0,03 | 0,15 | 0,0015 | 0,0015 | 0,0040 | 0,0004 | 0,0010 | 2 | 1 à 10 | 0,037 |
| D | | 36 | 0,35 | 0,03 | 0,15 | 0,0023 | 0,0010 | 0,0038 | 0,0005 | 0,0012 | 3 | 1 à 10 | 0,044 |
| E | | 36 | 0,35 | 0,03 | 0,15 | 0,0050 | 0,0020 | 0,0035 | 0,0004 | 0,0010 | 3 | 1 à 10 | 0,086 |
| F | reste (Bas Soufre) | 36 | 0,36 | 0,02 | 0,22 | 0,0005 | 0,0010 | 0,0045 | 0,0005 | 0,0011 | 1 | 1 à 10 | 0,022 |
| G | | 36 | 0,36 | 0,02 | 0,22 | 0,0005 | 0,0025 | 0,0045 | 0,0005 | 0,0020 | 1 | 1 à 10 | 0,028 |
| H | | 36 | 0,36 | 0,02 | 0,22 | 0,0005 | 0,0035 | 0,0050 | 0,0007 | 0,0010 | 2 | 1 à 10 | 0,038 |
| I | | 36 | 0,36 | 0,02 | 0,22 | 0,0005 | 0,0040 | 0,0055 | 0,0005 | 0,0010 | 3 | 1 à 10 | 0,043 |
| J | | 36 | 0,36 | 0,02 | 0,22 | 0,0005 | 0,0056 | 0,0030 | 0,0005 | 0,0010 | 3 | 1 à 10 | 0,045 |
| K | reste (Bas Soufre) | 36 | 0,35 | 0,03 | 0,25 | 0,0005 | 0,0015 | 0,0025 | 0,0003 | 0,0009 | 1 | 1 à 10 | 0,020 |
| L | | 36 | 0,35 | 0,03 | 0,25 | 0,0004 | 0,0010 | 0,0045 | 0,0003 | 0,0012 | 1 | 1 à 10 | 0,020 |
| M | | 36 | 0,35 | 0,03 | 0,25 | 0,0005 | 0,0015 | 0,0065 | 0,0005 | 0,0013 | 2 | 1 à 10 | 0,030 |
| N | | 36 | 0,35 | 0,03 | 0,25 | 0,0005 | 0,0015 | 0,0085 | 0,0003 | 0,0009 | 2 | 1 à 10 | 0,038 |
| O | | 36 | 0,35 | 0,03 | 0,25 | 0,0005 | 0,0030 | 0,0110 | 0,0005 | 0,0010 | 3 | 1 à 10 | 0,054 |

Composition chimique (% poids)

(suite)

| Alliage | | Composition chimique (% poids) | | | | | | | | | | Ligne de fusion TIG | Essais Varestraint 3,2% de déformation | Loi de comportement |
|---|---|---|---|---|---|---|---|---|---|---|---|---|---|---|
| | | Fe | Ni | Mn | C | Si | Ca | Mg | Al | S | O | Régularité du cordon 1 = Bon 2 = Acceptable 3 = Mauvais | Longueur totale de fissures (mm) | |
| **P** | | | **36** | **0,33** | **0,03** | **0,18** | **0,0023** | **0,0056** | **0,0100** | **0,0010** | **0,0013** | **3** | **1 à 10** | **0,079** |
| **R** | | | **36** | **0,33** | **0,03** | **0,18** | **0,0003** | **0,0005** | **0,0050** | **0,0030** | **0,0010** | **1** | **10 à 15** | **0,010** |
| S | Haut Soufre | reste | 36 | 0,33 | 0,03 | 0,18 | 0,0005 | 0,0007 | 0,0045 | 0,0030 | 0,0010 | 1 | 1 à 10 | 0,012 |
| T | | | 36 | 0,33 | 0,03 | 0,18 | 0,0007 | 0,0010 | 0,0040 | 0,0025 | 0,0010 | 1 | 1 à 10 | 0,016 |
| **U** | | | **36** | **0,33** | **0,03** | **0,18** | **0,0005** | **0,0007** | **0,0010** | **0,0027** | **0,0012** | **1** | **10 à 15** | **0,004** |
| **V** | | | **36** | **0,33** | **0,03** | **0,18** | **0,0007** | **0,0009** | **0,0017** | **0,0030** | **0,0012** | **1** | **10 à 15** | **0,008** |
| **W** | | | **36** | **0,33** | **0,03** | **0,18** | **0,0025** | **0,0015** | **0,0055** | **0,0018** | **0,0012** | **3** | **1 à 10** | **0,045** |

Dans le tableau ci-dessus, les exemples qui ne sont pas selon l'invention sont notés en gras.

Dans le groupe d'exemples référencés A à E, on a fait varier la teneur en calcium entre 0,0005% et 0,0050% en conservant des teneurs en silicium, magnésium, aluminium, soufre et oxygène sensiblement constantes, afin d'évaluer l'effet du calcium sur la régularité du cordon de soudure et sur la fissuration à chaud de l'alliage.

Dans le groupe d'exemples référencés F à J, on a fait varier la teneur en magnésium entre 0,0010% et 0,0056% en conservant des teneurs en silicium, calcium, aluminium, soufre et oxygène sensiblement constantes, afin d'évaluer l'effet du magnésium sur la régularité du cordon de soudure et sur la fissuration à chaud de l'alliage.

Dans le groupe d'exemples référencés K à O, on a fait varier la teneur en aluminium entre 0,0025% et 0,0110% en conservant des teneurs en silicium, calcium, magnésium, soufre et oxygène sensiblement constantes, afin d'évaluer l'effet de l'aluminium sur la régularité du cordon de soudure et sur la fissuration à chaud de l'alliage.

Dans le groupe d'exemples référencés P à W, on a évalué des alliages présentant des teneurs en soufre plus élevées que dans les groupes d'exemples précédents afin de déterminer les limites inférieures des teneurs de chacun des éléments Ca, Al et Mg permettant d'éviter la fissuration à chaud.

Dans les exemples référencés D, E, I, J, O, P et W, la relation (3,138 x Al + 6 x Mg + 13,418 x Ca) - (3,509 x O + 1,770 x S) prend des valeurs supérieures à la valeur limite supérieure de 0,038% définie dans la composition de l'alliage. Or, on observe que, dans ces exemples, le cordon de soudure présente une régularité considérée comme mauvaise (indice 3), tandis que la résistance à la fissuration de l'alliage résultant de l'essai Varestreint est bonne (longueur des fissures comprises entre 1 et 10 mm).

Dans les exemples R, U et V, la relation (3,138 x Al + 6 x Mg + 13,418 x Ca) - (3,509 x O + 1,770 x S) prend des valeurs inférieures à la borne limite inférieure de 0,011 précisée. Or, on observe que, dans ces exemples, le cordon de soudure obtenu présente une bonne régularité (indice 1), mais la résistance à la fissuration de l'alliage est mauvaise.

Dans tous les autres exemples, la relation (3,138 x Al + 6 x Mg + 13,418 x Ca) - (3,509 x O + 1,770 x S) prend des valeurs comprises entre la borne inférieure de 0,011% et la borne supérieure de 0,038% précisées. On observe que l'alliage présente une résistance à la fissuration considérée comme bonne (longueur totale des fissures comprise entre 0 et 10 mm) et que les cordons de soudure obtenus sont réguliers.

Ainsi, par un contrôle très précis des teneurs en calcium, aluminium et magnésium dans une plage de teneurs très faibles et en respectant les relations (d1) et (d2) entre ces éléments, le soufre et l'oxygène, on obtient un alliage Fe-Ni présentant un faible coefficient de dilatation thermique, et qui présente en outre une excellente soudabilité métallurgique. Ainsi, l'alliage selon l'invention peut avantageusement être utilisé comme métal de base pour la réalisation d'assemblages soudés à grande stabilité dimensionnelle.

Afin de vérifier l'effet de la teneur en silicium sur la sensibilité à la corrosion filamentaire, les inventeurs ont également réalisé des expériences sur des feuillards réalisés dans des alliages (a), (b) et (c) présentant des teneurs en Ni, Mn, C, Co, Cr, Mo, S, O, P, Ca, Mg et Al dans les plages précisées, mais des teneurs en silicium variables.

Ainsi, l'alliage (a) présente une teneur en silicium strictement inférieure à 0,01% en poids, l'alliage (b) présente une teneur en silicium égale à 0,1% en poids et l'alliage (c) présente une teneur en silicium égale à 0,25% en poids.

Ces feuillards ont été soumis à un traitement thermique industriel de recristallisation sous H2 avec un point de givre compris entre -50°C et -15°C, puis ont été laissés pendant 4000 h en chambre climatique à 55°C sous 95% d'humidité relative.

La fraction surfacique de corrosion filamentaire a ensuite été mesurée par analyse automatique d'images capturées au moyen d'un microscope optique à un grossissement de 200.

La figure 2 est un graphique illustrant les résultats des expériences réalisées par les inventeurs. Ces résultats montrent que, dans le cas des exemples (a) et (b), dans lesquels la teneur en silicium est supérieure ou égale à 0,1%, la fraction surfacique de corrosion filamentaire reste inférieure à 5% dans les conditions mentionnées ci-dessus. Au contraire, dans le cas de l'exemple (a), dans lequel la teneur en silicium est strictement inférieure à 0,1%, la fraction surfacique de corrosion filamentaire devient supérieure à 5% dans les conditions mentionnées ci-dessus.

Ainsi, les alliages présentant une teneur en silicium supérieure ou égale à 0,1% présentent une meilleure résistance à la corrosion filamentaire que des alliages présentent des teneurs en silicium strictement inférieure à 0,1%.

L'alliage selon l'invention peut également être utilisé pour fabriquer un fil de soudure. Un tel fil de soudure présente tous les avantages mentionnés ci-dessus en termes de résistance à la fissuration et de régularité des cordons de soudure obtenus lorsque le fil est utilisé comme fil d'apport de soudure. Par ailleurs, le cordon de soudure obtenu présentera un coefficient de dilatation thermique faible.

A titre d'exemple, un tel fil de soudure est réalisé par le procédé suivant. On élabore l'alliage en utilisant par exemple les méthodes d'élaboration décrites ci-avant. Ensuite, on coule cet alliage en demi-produits, et notamment en billettes. Ces demi-produits sont ensuite laminés à chaud pour obtenir un fil initial, aussi appelé fil machine. Un tel fil machine présente en général un diamètre compris entre 4 mm et 6 mm. Ensuite, le fil initial est tréfilé à froid pour en réduire le diamètre et obtenir le fil de soudure. Le diamètre du fil de soudure est de préférence compris entre 0,5 mm et 1,5 mm.

**Revendications**

1.  Alliage à base de fer comprenant, en poids :

$$35\% \leq Ni \leq 37\%$$

$$\text{traces} \leq Mn \leq 0,6\%$$

$$\text{traces} \leq C \leq 0,07\%$$

$$\text{traces} \leq Si \leq 0,35\%$$

$$\text{traces} \leq Cr \leq 0,5\%$$

$$\text{traces} \leq Co \leq 0,5\%$$

$$\text{traces} \leq P \leq 0,01\%$$

$$\text{traces} \leq Mo < 0,5\%$$

$$\text{traces} \leq S \leq 0,0035\%$$

$$\text{traces} \leq O \leq 0,0025\%$$

$$0,011\% \leq [(3,138 \times Al + 6 \times Mg + 13,418 \times Ca) - (3,509 \times O + 1,770 \times S)] \leq 0,038\%$$

$$0,0003\% < Ca \leq 0,0015\%$$

$$0,0005\% < Mg \leq 0,0035\%$$

$$0,0020\% < Al \leq 0,0085\%$$

le reste étant du fer et des éléments résiduels résultant de l'élaboration.

2.  Alliage selon la revendication 1, dans lequel :

$$Mn \geq 0,15\% \text{ en poids}$$

$$C \geq 0,02\% \text{ en poids}$$

$$Si \geq 0,1\% \text{ en poids.}$$

**3.** Alliage selon la revendication 1 ou 2, dans lequel la teneur en calcium est inférieure ou égale à 0,0010% en poids.

**4.** Alliage selon l'une quelconque des revendications précédentes, dans lequel la teneur en magnésium est inférieure ou égale à 0,0020% en poids.

**5.** Alliage selon l'une quelconque des revendications précédentes, dans lequel la teneur en aluminium est comprise entre 0,0030% et 0,0070% en poids.

**6.** Procédé de fabrication d'une bande en alliage selon l'une quelconque des revendications 1 à 5, comprenant les étapes successives suivantes :

- on élabore un alliage selon l'une quelconque des revendications 1 à 5 ;
- on forme un demi-produit dudit alliage ;
- on lamine à chaud ce demi-produit afin d'obtenir une bande à chaud ;
- on lamine à froid la bande à chaud en une ou plusieurs passes pour obtenir une bande à froid.

**7.** Bande réalisée dans un alliage selon l'une quelconque des revendications 1 à 5.

**8.** Procédé de fabrication d'un fil de soudure comprenant les étapes successives suivantes :

- on élabore un alliage selon l'une quelconque des revendications 1 à 5 ;
- on forme un demi-produit dudit alliage ;
- on lamine à chaud ce demi-produit pour fabriquer un fil initial ;
- on tréfile à froid le fil initial pour obtenir le fil de soudure.

**9.** Fil de soudure réalisé dans un alliage selon l'une quelconque des revendications 1 à 5.

**10.** Utilisation de l'alliage selon l'une quelconque des revendications 1 à 5, prise en combinaison avec la revendication 2, pour fabriquer des cuves ou des tubes destinés à recevoir un gaz liquéfié.

**Patentansprüche**

**1.** Eisenbasislegierung, in Gewicht aufweisend:

$$35\% \leq Ni \leq 37\%$$

$$Spuren \leq Mn \leq 0,6\%$$

$$Spuren \leq C \leq 0,07\%$$

$$Spuren \leq Si \leq 0,35\%$$

$$Spuren \leq Cr \leq 0,5\%$$

$$Spuren \leq Co \leq 0,5\%$$

$$Spuren \leq P \leq 0,01\%$$

$$Spuren \leq Mo < 0,5\%$$

$$Spuren \leq S \leq 0,0035\%$$

$$Spuren \leq O \leq 0,0025\%$$

$$0,011\% \leq [(3,138 \times Al + 6 \times Mg + 13,418 \times Ca) - (3,509 \times O + 1,770 \times S)] \leq 0,038\%$$

$$0,0003\% < Ca \leq 0,0015\%$$

$$0,0005\% < Mg \leq 0,0035\%$$

$$0,0020\% < Al \leq 0,0085\%$$

wobei der Rest aus Eisen und aus der Herstellung resultierenden Restelemente ist.

2. Legierung gemäß Anspruch 1, bei welcher:

$$Mn \geq 0,15 \ Gew.-\%$$

$$C \geq 0,02 \ Gew.-\%$$

$$Si \geq 0,1 \ Gew.-\%.$$

3. Legierung gemäß Anspruch 1 oder 2, bei welcher der Gehalt an Calcium kleiner oder gleich 0,0010 Gew.-% ist.

4. Legierung gemäß irgendeinem der vorhergehenden Ansprüche, bei welcher der Gehalt an Magnesium kleiner oder gleich 0,0020 Gew.-% ist.

5. Legierung gemäß irgendeinem der vorhergehenden Ansprüche, bei welcher der Gehalt an Aluminium zwischen 0,0030 Gew.-% und 0,0070 Gew.-% liegt.

6. Herstellungsverfahren eines Bands aus einer Legierung gemäß irgendeinem der Ansprüche 1 bis 5, aufweisend die folgenden sukzessiven Schritte:

   - Herstellen einer Legierung gemäß irgendeinem der Ansprüche 1 bis 5,
   - Formen eines Halbzeugs aus der Legierung,
   - Warmwalzen des Halbzeugs, um ein Warmband zu erhalten,
   - Kaltwalzen des Warmbands in einem oder mehreren Durchgängen, um ein Kaltband zu erhalten.

7. Band, welches durch eine Legierung gemäß irgendeinem der Ansprüche 1 bis 5 realisiert ist.

8. Herstellungsverfahren eines Schweißdrahts, aufweisend die folgenden sukzessiven Schritte:

   - Herstellen einer Legierung gemäß irgendeinem der Ansprüche 1 bis 5,
   - Formen eines Halbzeugs aus der Legierung,
   - Warmwalzen des Halbzeugs, um einen Ausgangsdraht herzustellen,
   - Kaltdrahtziehen des Ausgangsdrahts, um den Schweißdraht zu erhalten.

9. Schweißdraht, welcher durch eine Legierung gemäß irgendeinem der Ansprüche 1 bis 5 realisiert ist.

10. Verwendung der Legierung gemäß irgendeinem der Ansprüche 1 bis 5, in Kombination mit Anspruch 2, zum Herstellen von Behältern oder Rohren, welche zum Aufnehmen von Flüssiggas geeignet sind.

**Claims**

1. An alloy based on iron comprising, by weight:

$$35\% \leq Ni \leq 37\%$$

$$\text{trace amounts} \leq Mn \leq 0.6\%$$

$$\text{trace amounts} \leq C \leq 0.07\%$$

$$\text{trace amounts} \leq Si \leq 0.35\%$$

$$\text{trace amounts} \leq Cr \leq 0.5\%$$

$$\text{trace amounts} \leq Co \leq 0.5\%$$

$$\text{trace amounts} \leq P \leq 0.01\%$$

$$\text{trace amounts} \leq Mo < 0.5\%$$

$$\text{trace amounts} \leq S \leq 0.0035\%$$

$$\text{trace amounts} \leq O \leq 0.0025\%$$

$$0.011\% \leq [(3.138 \times Al + 6 \times Mg + 13.418 \times Ca) - (3.509 \times O + 1.770 \times S)] \leq 0.038\%$$

$$0.0003\% < Ca \leq 0.0015\%$$

$$0.0005\% < Mg \leq 0.0035\%$$

$$0.0020\% < Al \leq 0.0085\%$$

the remainder being iron and residual elements resulting from the elaboration.

2. The alloy according to claim 1, wherein:

$$Mn \geq 0.15\% \text{ by weight}$$

$$C \geq 0.02\% \text{ by weight}$$

$$Si \geq 0.1\% \text{ by weight.}$$

**3.** The alloy according to claim 1 or 2, wherein the calcium content is less than or equal to 0.0010% by weight.

**4.** The alloy according to any of the preceding claims, wherein the magnesium content is less than or equal to 0,0020% by weight.

**5.** The alloy according to any of the preceding claims, wherein the aluminium content is comprised between 0.0030% and 0.0070% by weight.

**6.** A method for manufacturing a strip in an alloy according to any of claims 1 to 5, comprising the following successive steps:

- an alloy is elaborated according to any of claims 1 to 5;
- a semi-finished product of said alloy is formed;
- this semi-finished product is hot-rolled in order to obtain a hot strip;
- the hot strip is cold-rolled in one or several passes in order to obtain a cold strip.

**7.** A strip made in an alloy according to any of claims 1 to 5.

**8.** A method for manufacturing a welding wire comprising the following successive steps:

- an alloy is elaborated according to any of claims 1 to 5;
- a semi-finished product of said alloy is formed;
- this semi-finished product is hot-rolled in order to manufacture an initial wire;
- the initial wire is cold-drawn in order to obtain the welding wire.

**9.** A welding wire made in an alloy according to any of claims 1 to 5.

**10.** The use of the alloy according to any of claims 1 to 5, taken in combination with claim 2, in order to manufacture tanks or tubes intended for receiving a liquefied gas.

## FIG.1

## FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 11061341 A
- JP H1192873 B
- JP 2001131706 A